# EUROPÄISCHE PATENTSCHRIFT

(11) **EP 1 887 194 B1**
(45) Veröffentlichungstag und Bekanntmachung des Hinweises auf die Patenterteilung: **30.06.2010**
(21) Anmeldenummer: 07113289.8
(22) Anmeldetag: 27.07.2007
(51) Int. Cl.: F01N 3/28

(54) **Abgasreinigungseinrichtung**
Exhaust gas purification device
Dispositif de purification de gas d'échappement

(30) Priorität: 04.08.2006 DE 102006036914
(43) Veröffentlichungstag der Anmeldung: 13.02.2008
(73) Patentinhaber: J. Eberspächer GmbH & Co. KG, 73730 Esslingen (DE)
(72) Erfinder: Prommersberger, Holger, 70825 Korntal-Münchingen (DE); Wirth, Georg, 73230, Kirchheim/Teck (DE); Rieck, Stefan, 89551, Königsbronn (DE); Beck, Thomas, 73773, Aichwald (DE)
(74) Vertreter: BRP Renaud & Partner

(56) Entgegenhaltungen:
- EP-A- 0 408 910
- DE-A1- 10 358 504
- DE-U1- 8 812 762

## Beschreibung

Die vorliegende Erfindung betrifft eine Abgasreinigungseinrichtung für eine Abgasanlage einer Brennkraftmaschine, insbesondere in einem Kraftfahrzeug, mit den Merkmalen des Oberbegriffs des Anspruchs 1.

Abgasreinigungseinrichtungen, wie z.B. Katalysatoren und Partikelfilter, können in einem gemeinsamen Gehäuse zwei oder mehr bezüglich einer Durchströmungsrichtung hintereinander angeordnete Reinigungselemente aufweisen. Bei den Reinigungselementen handelt es sich beispielsweise um Katalysatorelemente oder Partikelfilterelemente. Die Lagefixierung dieser Reinigungselemente im Gehäuse ist problematisch, da die jeweilige Abgasreinigungseinrichtung bei einem Einsatz in einem Kraftfahrzeug relativ starken Erschütterungen ausgesetzt ist und außerdem unter einer sehr hohen Temperaturbelastung steht. In diesem Zusammenhang können insbesondere unterschiedliche thermische Ausdehnungskoeffizienten zwischen dem Gehäuse einerseits und dem jeweiligen Reinigungselement andererseits zusätzliche Probleme bei der Lagefixierung schaffen.

Aus der DE 88 12 762 U1 ist eine Abgasreinigungseinrichtung in Form eines Katalysators bekannt, die ein Gehäuse und zwei darin angeordnete Reinigungselemente aufweist. Das Gehäuse erstreckt sich koaxial zu einer Durchströmungsrichtung und die beiden Reinigungselemente sind bezüglich der Durchströmungsrichtung hintereinander angeordnet. An ihren voneinander abgewandten äußeren axialen Enden sind die Reinigungselemente jeweils am Gehäuse befestigt. Bei der bekannten Abgasreinigungseinrichtung sind die beiden Reinigungselemente an ihren einander zugewandten inneren Enden unmittelbar aneinander über einen Schiebesitz axial verschiebbar gelagert. Zusätzlich können am Gehäuse nach innen abstehende Sicken vorgesehen sein, um die Reinigungselemente radial abzustützen.

Eine Abgasreinigungseinrichtung ähnlicher Bauart ist auch aus der EP 0 408 910 A2 bekannt. Auch dort sind die beiden Reinigungselemente an ihren einander zugewandten inneren axialen Enden ineinander eingesteckt, um einen Schiebesitz zu bilden. Ferner sind am Gehäuse nach innen vorstehende Sicken ausgebildet, welche die Reinigungselemente in der Nähe ihrer inneren axialen Enden radial abstützen.

Die vorliegende Erfindung beschäftigt sich mit dem Problem, für eine Abgasreinigungseinrichtung der eingangs genannten Art eine verbesserte Ausführungsform anzugeben, die sich insbesondere durch eine erhöhte Lebensdauer der Lagefixierung bzw. der Lagerung der Reinigungselemente im Gehäuse auszeichnet.

Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die beiden Reinigungselemente an voneinander abgewandten äußeren axialen Enden jeweils am Gehäuse zu befestigen und an ihren einander zugewandten inneren axialen Enden an einer Lageranordnung radial abzustützen, die ihrerseits relativ zum Gehäuse axial verschiebbar angeordnet ist. Auf diese Weise wird mit Hilfe der zwischen den Reinigungselementen angeordneten Lageranordnung für beide Reinigungselemente ein axial wirksamer Schiebesitz geschaffen, der gleichzeitig eine radiale Abstützung der Reinigungselemente bewirkt. Auf diese Weise ist jedes Reinigungselement an seinem äußeren axialen Ende fest am Gehäuse fixiert und an seinem inneren axialen Ende radial abgestützt und axial beweglich gelagert. Demnach kann sich jedes Reinigungselement für sich unabhängig vom Gehäuse thermisch ausdehnen, wodurch thermisch bedingte Verspannungen reduziert werden. Gleichzeitig führt die an beiden axialen Enden realisierte radiale Abstützung der Reinigungselemente zu einer stabilen Lagefixierung innerhalb des Gehäuses, wodurch die Gefahr einer Beschädigung der Abgasreinigungseinrichtung aufgrund von Erschütterungen reduziert ist.

Bei einer bevorzugten Ausführungsform kann die Lageranordnung axial verschiebbar am Gehäuse radial abgestützt sein. Durch diese Bauweise ist das jeweilige Reinigungselement an seinem inneren axialen Ende nicht direkt, sondern indirekt über die Lageranordnung am Gehäuse radial abgestützt sowie axial verschiebbar gelagert. Hierdurch kann z.B. für die Lagerfunktion eine geeignete Materialkombination zwischen Lageranordnung und Gehäuse unabhängig vom Material des Reinigungselements gewählt werden.

Gemäß einer anderen Ausführungsform kann an der Lageranordnung radial außen zumindest ein Lagerring aus einem Lagermaterial befestigt sein, über den sich die Lageranordnung axial verschiebbar am Gehäuse radial abstützt. Durch die Verwendung des separaten Lagerrings kann ein Lagermaterial ausgewählt werden, das sich in besonderer Weise zur Lagerung der Reinigungselemente am Gehäuse eignet. Beispielsweise kann das Lagermaterial so gewählt und beschaffen sein, dass es eine gewisse Dämpfungswirkung für Relativbewegungen zwischen dem Gehäuse und dem jeweiligen Reinigungselement zeigt.

Bei einer anderen vorteilhaften Ausführungsform kann die Lageranordnung zwei Ringkörper aufweisen, die aneinander axial verschiebbar gelagert sind, z. B. mittels einer teleskopartigen Steckverbindung. Je eines der Reinigungselemente ist an seinem inneren axialen Ende an je einem dieser Ringkörper befestigt. Hierdurch ergibt sich eine besonders effektive Stabilisierung für die Positionierung der Reinigungselemente im Gehäuse.

Diese indirekte Lagerung bzw. Positionierung über die Lageranordnung ist auch im Hinblick auf relativ grobe Fertigungstoleranzen vorteilhaft, da mit Hilfe der Lageranordnung Maßabweichungen vergleichsweise einfach ausgleichbar sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt einer Abgasreinigungseinrichtung,
- Fig. 2: ein vergrößertes Detail II aus Fig. 1,
- Fig. 3: ein vergrößertes Detail III aus Fig. 1,
- Fig. 4: eine Ansicht wie in Fig. 3, jedoch zu einem anderen Montagezeitpunkt,
- Fig. 5: eine Ansicht wie in Fig. 3, jedoch bei einer anderen Ausführungsform,
- Fig. 6: einen Querschnitt der Abgasreinigungseinrichtung gemäß Schnittlinien VI in Fig. 5,
- Fig. 7: eine Ansicht wie in Fig. 5, jedoch bei einer weiteren Ausführungsform.

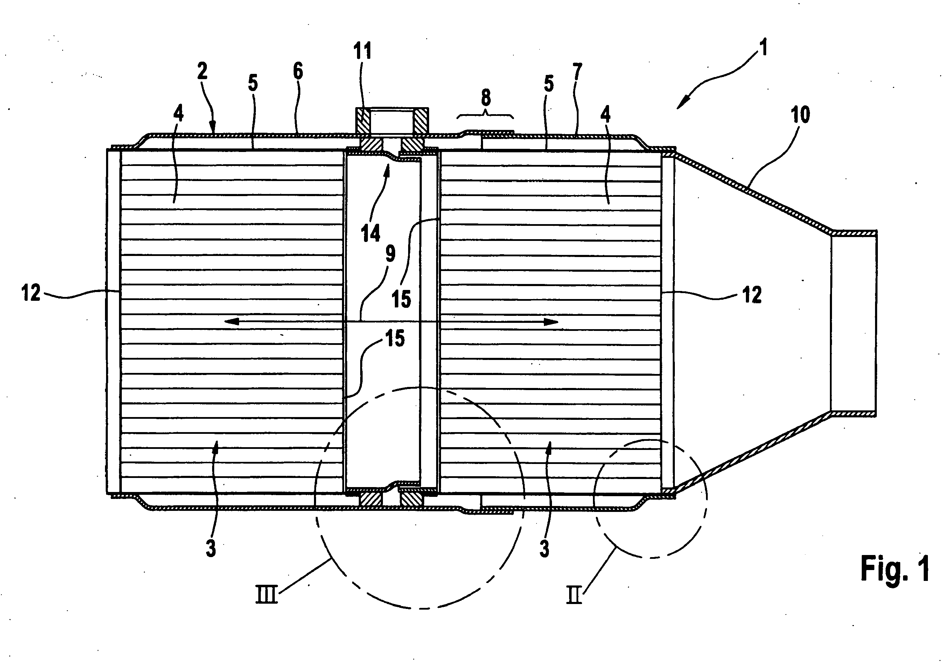

Entsprechend Fig. 1 umfasst eine erfindungsgemäße Abgasreinigungseinrichtung 1 ein Gehäuse 2, in dem zumindest zwei Reinigungselemente 3 angeordnet sind. Die Abgasreinigungseinrichtung 1 ist für den Einsatz in einer Abgasanlage einer Brennkraftmaschine vorgesehen, wobei sich die Abgasanlage bzw. die Brennkraftmaschine in einem Kraftfahrzeug befinden kann. Bei der Abgasreinigungseinrichtung 1 kann es sich beispielsweise um ein Partikelfilter handeln, wobei dann die Reinigungselemente 3 Partikelfilterelemente sind. Bevorzugt handelt es sich bei der Abgasreinigungseinrichtung 1 jedoch um einen Katalysator, so dass es sich bei den Reinigungselementen 3 um Katalysatorelemente handelt. Bei modernen Katalysatoren kommen Katalysatorelemente mit einem metallischen Katalysatorträger zum Einsatz. Bei einer derartigen, bevorzugten Ausführungsform umfasst das Reinigungselement 3, also das Katalysatorelement, einen Reinigungskörper 4, der radial außen von einem Mantel 5 umhüllt ist. Der Reinigungskörper 4 besteht vorzugsweise aus katalytisch beschichteten, gewickelten oder gefalteten Metallbahnen, die im fertigen Zustand eine Vielzahl von Kanälen bilden, die vom Abgas durchströmbar sind. Auch der Mantel 5 besteht vorzugsweise aus Metall und ist z. B. aus rohrförmig gewickeltem Bahnenmaterial hergestellt. Der Mantel 5 ist in der Regel fest mit dem Reinigungskörper 4 verbunden, z.B. durch Verlöten.

Das Gehäuse 2 ist im gezeigten Beispiel aus zwei Gehäuseteilen 6 und 7 zusammengebaut, wobei die beiden Gehäuseteile 6, 7 in axialer Richtung des Gehäuses 2 aneinander grenzen. Die beiden Gehäuseteile 6, 7 sind in einem Steckbereich 8 axial ineinander gesteckt und im fertig montierten Zustand aneinander befestigt, z.B. durch Verlöten oder Verschweißen.

Das Gehäuse 2 erstreckt sich koaxial zu einer Durchströmungsrichtung 9, die hier durch einen Doppelpfeil angedeutet ist. Das Gehäuse 2 kann zusätzlich mit zumindest einem Trichter 10 versehen sein, der an einem axialen Ende des Gehäuses 2 befestigt ist. Je nach Strömungsrichtung ist ein Einströmtrichter und/oder ein Ausströmtrichter vorgesehen.

Des Weiteren ist am Gehäuse 2 eine Anschlussstelle 11 ausgebildet, mit deren Hilfe eine nicht gezeigte Abgassonde am Gehäuse 2 so befestigt werden kann, dass die Abgassonde das die Abgasreinigungseinrichtung 1 durchströmende Abgas sensieren kann. Bei der Abgassonde kann es sich beispielsweise um eine Lambda-Sonde oder um einen Temperatursensor oder um einen Drucksensor oder um einen beliebigen anderen Sensor handeln. Die Anschlussstelle 11 ist axial zwischen den beiden Reinigungselementen 3 positioniert.

Die beiden Reinigungselemente 3 sind bezüglich der Durchströmungsrichtung 9 hintereinander im Gehäuse 2 angeordnet. Dabei ist jedes Reinigungselement 3 an einem vom jeweils anderen Reinigungselement 3 abgewandten äußeren axialen Ende 12 am Gehäuse 2 befestigt.

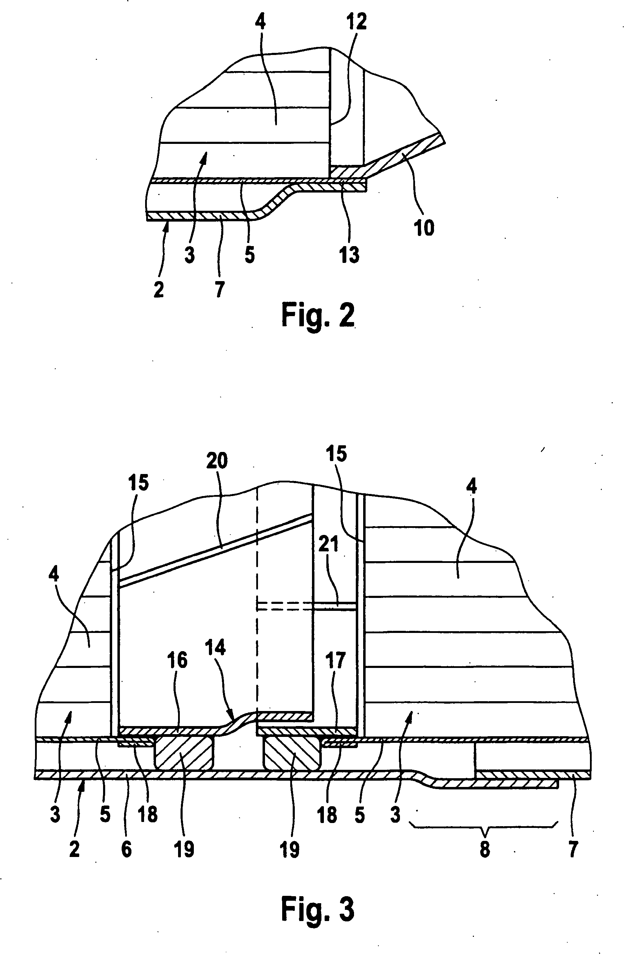

Entsprechend Fig. 2 erfolgt die Befestigung des jeweiligen Reinigungselements 3 am Gehäuse 2 vorzugsweise so, dass ein am äußeren axialen Ende 12 axial vorstehender äußerer Kragen 13 radial zwischen einem Endabschnitt des Gehäuses 2 bzw. des Gehäuseteils 7 und einem Endabschnitt des Trichters 10 angeordnet ist und beispielsweise durch Löten oder Verschweißen fixiert ist. Insbesondere ist der äußere Kragen 13 gemeinsam mit dem Trichter 10 mit dem Gehäuse 2 verschweißt. Der äußere Kragen 13 lässt sich besonders einfach dadurch realisieren, dass der Mantel 5 in axialer Richtung um ein entsprechendes Maß über den Reinigungskörper 4 vorsteht.

Fig. 1 ist außerdem eine weitere Besonderheit zu entnehmen, denn bei der hier gezeigten, bevorzugten Ausführungsform ist das Gehäuse 2 axial zwischen den äußeren axialen Enden 12 der Reinigungselemente 3 von diesen Reinigungselementen 3 radial beabstandet. Hierdurch wird im Gehäuse 2 quasi über die gesamte axiale Länge der Reinigungselemente 3 eine Spaltisolation realisiert, welche die thermische Belastung des Gehäuses 2 reduziert.

Des Weiteren umfasst die Abgasreinigungseinrichtung 1 in ihrem Gehäuse 2 eine Lageranordnung 14, die sich in Umfangsrichtung erstreckt und die axial zwischen den Reinigungselementen 3 im Gehäuse 2 angeordnet ist. Die Lageranordnung 14 ist relativ zum Gehäuse 2 axial verschiebbar angeordnet. Dabei ist jedes Reinigungselement 3 an seinem dem jeweils anderen Reinigungselement 3 zugewandten inneren axialen Ende 15 an dieser Lageranordnung 14 radial abgestützt.

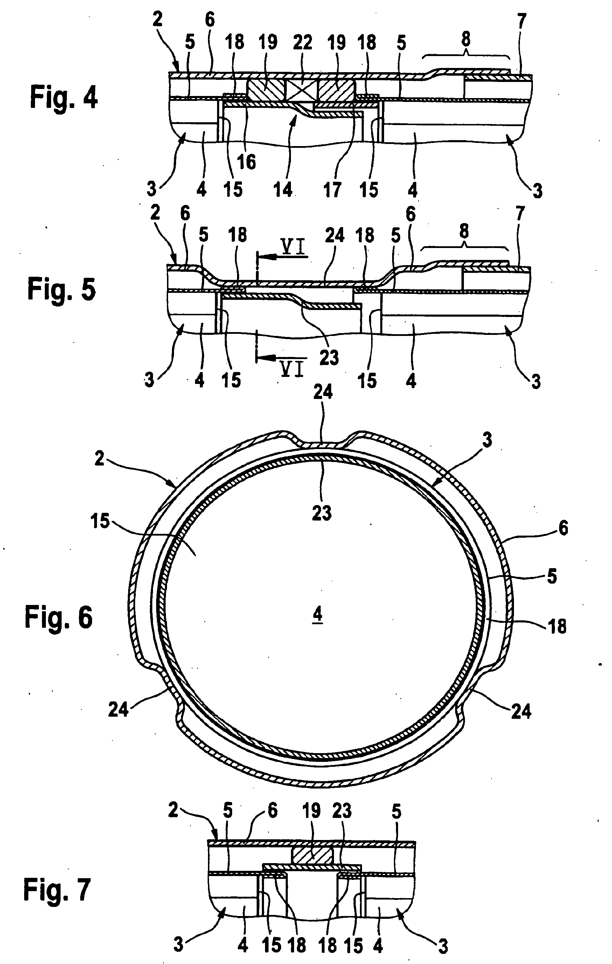

Entsprechend den Ausführungsformen der Fig. 3 und 4 weist die Lageranordnung 15 vorzugsweise zwei Ringkörper 16 bzw. 17 auf. Die beiden Ringkörper 16, 17 sind aneinander axial verschiebbar gelagert. Beispielsweise sind die Ringkörper 16, 17 hierzu axial teleskopierbar ineinander gesteckt. Die Reinigungselemente 3 sind nun an ihren inneren axialen Enden 15 jeweils mit dem dazu benachbarten Ringkörper 16, 17 fest verbunden. Hierzu kann jedes Reinigungselement 3 an seinem inneren axialen Ende 15 einen axial vorstehenden inneren Kragen 18 aufweisen, mit dem das jeweilige Reinigungselement 3 auf den zugehörigen Ringkörper 16 bzw. 17 aufgesteckt ist.

Im gezeigten, montierten Zustand umschließt der jeweilige innere Kragen 18 den zugehörigen Ringkörper 16, 17. Im Bereich des inneren Kragens 18 erfolgt beispielsweise eine Verschweißung oder Verlötung. Zur Versteifung kann der innere Kragen 18 wie hier zumindest einfach umgebördelt sein. Der innere Kragen 18 wird besonders einfach dadurch realisiert, dass der Mantel 5 um ein entsprechendes Maß in axialer Richtung über den Reinigungskörper 4 vorsteht.

Die Lageranordnung 14 ist hier mit zwei Lagerringen 19 versehen, die aus einem geeigneten Lagermaterial, z.B. Drahtgestrick, bestehen. Die Lagerringe 19 sind radial außen an der Lageranordnung 14 befestigt. Vorzugsweise ist je ein Lagerring 19 an jedem Ringkörper 16, 17 befestigt. Über die Lagerringe 19 stützt sich der jeweilige Ringkörper 16, 17 und somit die Lageranordnung 14 am Gehäuse 2 ab. Insoweit stützen sich die Reinigungselemente 3 an ihren inneren axialen Enden 15 über die Lageranordnung 14 radial am Gehäuse 2 ab, wobei gleichzeitig eine axiale Verschiebbarkeit dieser inneren axialen Enden 15 relativ zum Gehäuse 2 gewährleistet ist. Denn jeder Lagerring 19 ist axial verschiebbar am Gehäuse 2 radial abgestützt. Insoweit ist auch der jeweilige Ringkörper 16, 17 bzw. die gesamte Lageranordnung 14 axial verschiebbar am Gehäuse 2 radial abgestützt.

Die Ringkörper 16, 17 können axial geschlitzt sein. Das bedeutet, dass der jeweilige Ringkörper 16, 17 entsprechend Fig. 3 in Umfangsrichtung eine Unterbrechung 20 bzw. 21 aufweist, die sich durchgehend von der einen axialen Stirnseite des jeweiligen Ringkörpers 16, 17 bis zur anderen axialen Stirnseite des jeweiligen Ringkörpers 16, 17 erstreckt. Durch diese schlitzartige Unterbrechung 20, 21 ist der Durchmesser des jeweiligen Ringkörpers 16, 17 besonders einfach an den Durchmesser des inneren Kragens 18 des jeweiligen Reinigungselements 3 anpassbar, was die Herstellung einer haltbaren Löt- bzw. Schweißverbindung zwischen dem jeweiligen Ringkörper 16, 17 und dem zugehörigen Reinigungselement 3 vereinfacht. Sofern über die Anschlussstelle 11 eine Abgassonde am Gehäuse 2 so montiert werden muss, dass die jeweilige Abgassonde radial in das Gehäuse 2 hineinragt, kann vorgesehen sein, die Lagerringe 19 und die Ringkörper 16, 17, also letztlich die gesamte Lageranordnung 14 in Umfangsrichtung mit einer Unterbrechung zu versehen, wobei dann im Bereich dieser Unterbrechung die Anschlussstelle 11 angeordnet ist. Somit kann die jeweilige Abgassonde durch die Unterbrechung hindurch in das Gehäuse 2 eindringen.

Bei einer anderen Ausführungsform kann ein einzelner Lagerring 19 ausreichen. Beispielsweise kommt die in den Fig. 3 und 4 gezeigte Ausführungsform mit nur einem Lagerring 19 aus, wenn derjenige Ringkörper 16, 17, der dann keinen Lagerring 19 trägt, über den im Steckbereich ausgebildeten axialen Schiebesitz am anderen Ringkörper 16, 17 hinreichend radial abgestützt ist und somit über dessen Lagerring 19 am Gehäuse 2 abgestützt ist.

Für die Montage der Abgasreinigungseinrichtung 1 wird die Lageranordnung 14 in das zugehörige Gehäuseteil 6 axial eingesetzt. Hierbei kann bereits eine radiale Verspannung bzw. Kompression der Lagerringe 19 erreicht werden. Hierzu vereinfacht die Steckverbindung der Gehäuseteile 6, 7 im Steckbereich 8 das Einführen der Lagerringe 19 durch den aufgeweiteten Querschnitt des jeweiligen Gehäuseteils 6 im Steckabschnitt 8. Um die beiden Ringkörper 16, 17 in einer vorbestimmten Relativlage zueinander für den Montagevorgang positionieren zu können, ist es beispielsweise möglich, eine Montagehilfe 22 einzusetzen, die beispielsweise die Form eines sich in Umfangsrichtung parallel zu den Lagerringen 19 erstreckenden Rings aufweist. Die Montagehilfe 22 ist hinsichtlich ihres Materials vorzugsweise so ausgewählt, dass sie beim Verlöten oder beim Verschweißen der Reinigungselemente 3 mit der Lageranordnung 14 oder spätestens im Betrieb der Abgasreinigungseinrichtung 1 ausbrennt.

Entsprechend den Fig. 5 bis 7 sind auch Ausführungsformen möglich, bei denen die Lageranordnung 14 nur einen einzigen Ringkörper 23 aufweist. Das eine Reinigungselement 3, hier das links dargestellte Reinigungselement 3, ist an seinem inneren axialen Ende 15 am Ringkörper 23, also an der Lageranordnung 14 befestigt, beispielsweise durch Verlöten oder Verschweißen. Im Unterschied dazu ist das andere Reinigungselement 3, hier das rechts gezeigte Reinigungselement 3, axial verschiebbar an dem Ringkörper 23 bzw. an der Lageranordnung 14 radial abgestützt. Zur Realisierung der axialen Verschiebbarkeit kann der Ringkörper 23, wie in Fig. 5 gezeigt, gestuft sein.

Bei der Ausführungsform der Fig. 5 und 6 sind die Reinigungselemente 3 außerdem jeweils an ihrem inneren axialen Ende 15 axial verschiebbar am Gehäuse 2 radial abgestützt. Zur Realisierung dieser axial verschiebbaren und radial abgestützten Lagerung der Reinigungselemente 3 am Gehäuse 2 kann das Gehäuse 2 entsprechend den Fig. 5 und 6 im Bereich der Lageranordnung 14 mehrere radial nach innen vorstehende, in Umfangsrichtung verteilt angeordnete Einbuchtungen 24 aufweisen. Ebenso ist es möglich, anstelle mehrerer separater, in Umfangsrichtung verteilt angeordneter Einbuchtungen 24 eine einzige Einbuchtung 24 vorzusehen, die sich dann ringförmig erstreckt und ebenfalls radial nach innen vorsteht.

Bei der in Fig. 7 gezeigten Ausführungsform ist die Lageranordnung 14 bzw. der einzige Ringkörper 23 über wenigstens einen Lagerring 19 radial am Gehäuse 2 abgestützt und über diesen wenigstens einen Lagerring 19 axial verschiebbar am Gehäuse 2 gelagert. Die inneren axialen Enden 16 der Reinigungselemente 3 sind hier exemplarisch in den Ringkörper 23 eingesteckt.

## Patentansprüche

1. Abgasreinigungseinrichtung für eine Abgasanlage einer Brennkraftmaschine, insbesondere in einem Kraftfahrzeug,
- mit einem Gehäuse (2), das sich koaxial zu einer Durchströmungsrichtung (9) erstreckt,
- mit zwei im Gehäuse (2) bezüglich der Durchströmungsrichtung (9) hintereinander angeordneten Reinigungselementen (3), die an ihren voneinander abgewandten äußeren axialen Enden (12) jeweils am Gehäuse (2) befestigt sind,
**dadurch gekennzeichnet,**
- **dass** eine sich in Umfangsrichtung erstreckende, axial zwischen den Reinigungselementen (3) im Gehäuse (2) angeordnete Lageranordnung (14) vorgesehen ist, die relativ zum Gehäuse (2) axial verschiebbar angeordnet ist und die zumindest einen bezüglich des Gehäuses (2) separaten Ringkörper (5, 17; 23) aufweist,
- wobei die Reinigungselemente (3) an ihren einander zugewandten inneren axialen Enden (15) jeweils an der Lageranordnung (14) radial abgestützt sind.

2. Abgasreinigungseinrichtung nach Anspruch 1,
**dadurch gekennzeichnet,**
**dass** die Lageranordnung (14) axial verschiebbar am Gehäuse (2) radial abgestützt ist.

3. Abgasreinigungseinrichtung nach Anspruch 1 oder 2,
**dadurch gekennzeichnet,**
**dass** an der Lageranordnung (14) radial außen wenigstens ein Lagerring (19) aus einem Lagermaterial befestigt ist, über den sich die Lageranordnung (14) axial verschiebbar am Gehäuse (2) radial abstützt.

4. Abgasreinigungseinrichtung nach einem der Ansprüche 1 bis 3,
**dadurch gekennzeichnet,**
- **dass** die Lageranordnung (14) zwei Ringkörper (16, 17) aufweist, die aneinander axial verschiebbar gelagert sind,
- **dass** das eine Reinigungselement (3) an seinem inneren axialen Ende (15) an dem einen Ringkörper (16) befestigt ist,
- **dass** das andere Reinigungselement (3) an seinem inneren axialen Ende (15) am anderen Ringkörper (17) befestigt ist.

5. Abgasreinigungseinrichtung nach Anspruch 3 oder 4,
**dadurch gekennzeichnet,**
- **dass** der jeweilige Lagerring (19) und/oder der jeweilige Ringkörper (16, 17) in Umfangsrichtung eine Unterbrechung aufweist/aufweisen,
- **dass** im Bereich der Unterbrechung eine Anschlussstelle (11) für eine Abgassonde am Gehäuse (2) ausgebildet ist.

6. Abgasreinigungseinrichtung nach Anspruch 1,
**dadurch gekennzeichnet,**
- **dass** das eine Reinigungselement (3) an seinem inneren axialen Ende (15) an der Lageranordnung (14) befestigt ist,
- **dass** das andere Reinigungselement (3) an seinem inneren axialen Ende (15) axial verschiebbar an der Lageranordnung (14) radial abgestützt ist.

7. Abgasreinigungseinrichtung nach Anspruch 1 oder 6,
**dadurch gekennzeichnet,**
**dass** die Reinigungseinrichtungen (3) an ihren inneren axialen Enden (15) axial verschiebbar am Gehäuse (2) radial abgestützt sind.

8. Abgasreinigungseinrichtung nach Anspruch 7,
**dadurch gekennzeichnet,**
**dass** das Gehäuse (2) zur axial verschiebbaren und radial abgestützten Lagerung der Reinigungselemente (3) im Bereich der Lageranordnung (14) eine radial nach innen vorstehende, ringförmige Einbuchtung oder mehrere radial nach innen vorstehende, in Umfangsrichtung verteilt angeordnete Einbuchtungen (24) aufweist.

9. Abgasreinigungseinrichtung nach einem der Ansprüche 6 bis 8,
**dadurch gekennzeichnet,**
**dass** die Lageranordnung (14) nur einen Ringkörper (23) aufweist, an dem einerseits die eine Reinigungseinrichtung (3) an ihrem inneren axialen Ende (15) befestigt ist und an dem andererseits die andere Reinigungseinrichtung (3) an ihrem inneren axialen Ende (15) axial verschiebbar radial abgestützt ist.

10. Abgasreinigungseinrichtung zumindest nach Anspruch 4 oder 9,
**dadurch gekennzeichnet,**
**dass** an wenigstens einem der Ringkörper (16, 17) radial außen ein Lagerring (19) aus einem Lagermaterial befestigt ist, über den sich der jeweilige Ringkörper (16, 17) axial verschiebbar am Gehäuse (2) radial abstützt.

11. Abgasreinigungseinrichtung nach einem der Ansprüche 1 bis 10,
**dadurch gekennzeichnet,**
**dass** zumindest eines der Reinigungselemente (3) an seinem inneren axialen Ende (15) einen axial vorstehenden Kragen (18) aufweist, der die Lageranordnung (14) radial außen umschließt.

12. Abgasreinigungseinrichtung nach einem der Ansprüche 1 bis 11,
**dadurch gekennzeichnet,**
**dass** der jeweilige Ringkörper (16, 17, 23) in Umfangsrichtung eine Unterbrechung (20, 21) aufweist, die sich durchgehend von der einen axialen Stirnseite des jeweiligen Ringkörpers (16, 17, 23) bis zur anderen axialen Stirnseite des jeweiligen Ringkörpers (16, 17, 23) erstreckt.

13. Abgasreinigungseinrichtung nach einem der Ansprüche 1 bis 12,
**dadurch gekennzeichnet,**
**dass** das Gehäuse (2) aus zumindest zwei Gehäuseteilen (6, 7) besteht, die in axialer Richtung ineinander gesteckt und aneinander befestigt sind.

14. Abgasreinigungseinrichtung nach einem der Ansprüche 1 bis 13,
**dadurch gekennzeichnet,**
**dass** das Gehäuse (2) axial zwischen den äußeren axialen Enden (12) der Reinigungseinrichtungen (3) von den Reinigungseinrichtungen (3) axial beabstandet ist.

## Claims

1. An exhaust gas cleaning device for an exhaust system of a combustion engine, more preferably in a motor vehicle,
- with a housing (2) which extends coaxially to a through-flow direction (9),
- with two cleaning elements (3) arranged in the housing (2) behind each other with respect to the through-flow direction (9) each of which on their outer axial ends (12) facing away from each other is fastened to the housing (2), **characterized**
- **in that** a bearing arrangement (14) extending in circumferential direction and axially arranged between the cleaning elements (3) in the housing (2) is provided which is arranged in an axially displaceable manner relative to the housing (2) and which comprises at least one ring body (5, 17; 23) separate with regard to the housing (2),
- wherein the cleaning elements (3) on their inner axial ends (15) facing each other are each radially supported on the bearing arrangement (14).

2. The exhaust gas cleaning device according to Claim 1, **characterized in that** the bearing arrangement (14) is radially supported in an axially displaceable manner on the housing (2).

3. The exhaust gas cleaning device according to Claim 1 or 2, **characterized in that** on the bearing arrangement (14) at least one bearing ring (19) of a bearing material is fastened radially outside via which the bearing arrangement (14) is radially supported on the housing (2) in an axially displaceable manner.

4. The exhaust gas cleaning device according to any one of the Claims 1 to 3, **characterized**
- **in that** the bearing arrangement (14) comprises two ring bodies (16, 17) which are mounted on each other in an axially displaceable manner,
- **in that** a cleaning element (3) on its inner axial end (15) is fastened to the one ring body (16),
- **in that** the other cleaning element (3) on its inner axial end (15) is fastened to the other ring body (17).

5. The exhaust gas cleaning device according to Claim 3 or 4, **characterized**
- **in that** the respective bearing ring (19) and/or the respective ring body (16, 17) in circumferential direction, comprise/comprises an interruption,
- that in the region of the interruption a connecting point (11) for an exhaust gas probe is formed on the housing (2).

6. The exhaust gas cleaning device according to Claim 1, **characterized**
- **in that** a cleaning element (3) on its inner axial end (15) is fastened to the bearing arrangement (14),
- **in that** the other cleaning element (3) on its inner axial end (15) is radially supported on the bearing arrangement (14) in an axially displaceable manner.

7. The exhaust gas cleaning device according to Claim 1 or 6, **characterized in that** the cleaning devices (3) on their inner axial ends (15) are radially supported on the housing (2) in an axially displaceable manner.

8. The exhaust gas cleaning device according to Claim 7, **characterized in that** the housing (2) for the axially displaceable and radially supported mounting of the cleaning elements (3) in the region of the bearing arrangement (14) comprises a ring-shaped indentation protruding to the inside or a plurality of indentations (24) protruding to the inside arranged distributed in circumferential direction.

9. The exhaust gas cleaning device according to any one of the Claims 6 to 8, **characterized in that** the bearing arrangement (14) only comprises a ring body (23) to which on the one hand the one cleaning device (3) on its inner axial end (15) is fastened and on which on the other hand the other cleaning device (3) on its inner axial end (15) is radially supported in an axially displaceable manner.

10. The exhaust gas cleaning device according to at least Claim 4 or 9, **characterized in that** to at least one of the ring bodies (16, 17) a bearing ring (19) of a bearing material is fastened radially outside via which the respective ring body (16, 17) is radially supported on the housing (2) in an axially displaceable manner.

11. The exhaust gas cleaning device according to any one of the Claims 1 to 10, **characterized in that** at least one of the cleaning elements (3) on its inner axial end (15) comprises an axially protruding collar (18) which encloses the bearing arrangement (14) radially outside.

12. The exhaust gas cleaning device according to any one of the Claims 1 to 11, **characterized in that** the respective ring body (16, 17, 23) in circumferential direction comprises an interruption (20, 21) which continuously extends from the one axial face end of the respective ring body (16, 17, 23) to the other axial face end of the respective ring body (16, 17, 23).

13. The exhaust gas cleaning device according to any one of the Claims 1 to 12, **characterized in that** the housing (2) consists of at least two housing parts (6, 7) which in axial direction are inserted into each other and fastened to each other.

14. The exhaust gas cleaning device according to any one of the Claims 1 to 13, **characterized in that** the housing (2) axially between the outer axial ends (12) of the cleaning devices (3) is axially spaced from the cleaning devices (3).

## Revendications

1. Dispositif de nettoyage des gaz brûlés pour une installation d'échappement d'un moteur à combustion interne, en particulier sur un véhicule automobile, comprenant
- un boîtier (2), qui s'étend sur le même axe qu'un sens d'écoulement (9),
- deux éléments de nettoyage (3) disposés dans le boîtier (2) l'un derrière l'autre par rapport au sens d'écoulement (9), qui sont fixés chacun sur le boîtier (2) sur leurs extrémités (12) axiales extérieures, opposés les unes aux autres,
**caractérisé en ce que**,
- il est prévu un agencement de palier (14) s'étendant dans le sens périphérique, disposé axialement entre les éléments de nettoyage (3) dans le boîtier (2), qui est disposé de façon à pouvoir coulisser axialement par rapport au boîtier (2) et qui présente au moins un corps annulaire (5, 17 ; 23) séparé par rapport au boîtier (2),
- les éléments de nettoyage (3) étant soutenus radialement sur leurs extrémités (15) axiales intérieures, opposées les unes aux autres, à chaque fois sur l'agencement de palier (14).

2. Dispositif de nettoyage des gaz brûlés selon la revendication 1,
**caractérisé en ce que**,
l'agencement de palier (14) est soutenu radialement sur le boîtier (2) de façon à pouvoir coulisser axialement.

3. Dispositif de nettoyage des gaz brûlés selon la revendication 1 ou 2,
**caractérisé en ce que**
sur l'agencement de palier (14) est fixée radialement à l'extérieur au moins une bague de palier (19) à base d'un matériau de palier, par laquelle l'agencement de palier (14) s'appuie radialement sur le boîtier (2) de façon à pouvoir coulisser axialement.

4. Dispositif de nettoyage des gaz brûlés selon l'une quelconque des revendications 1 à 3,
**caractérisé en ce que**
- l'agencement de palier (14) présente deux corps annulaires (16, 17), qui sont logés l'un contre l'autre de façon à pouvoir coulisser axialement,
- **en ce que** l'un des éléments de nettoyage (3) est fixé sur son extrémité (15) axiale intérieure sur l'un des corps annulaires (16),
- **en ce que** l'autre élément de nettoyage (3) est fixé par son extrémité (15) axiale intérieure sur l'autre corps annulaire (17).

5. Dispositif de nettoyage des gaz brûlés selon la revendication 3 ou 4,
**caractérisé en ce que**,
- la bague de palier (19) respective et/ou le corps annulaire (16, 17) respectif présente/présentent une interruption dans le sens périphérique,
- **en ce qu'**un point de raccordement (11) pour une sonde d'échappement est réalisé sur le boîtier (2) dans la zone de l'interruption.

6. Dispositif de nettoyage des gaz brûlés selon la revendication 1,
**caractérisé en ce que**,
- l'un des éléments de nettoyage (3) est fixé par son extrémité (15) axiale intérieure sur l'agencement de palier (14),
- **en ce que** l'autre élément de nettoyage (3) est soutenu radialement sur l'agencement de palier (14) de façon à pouvoir coulisser axialement sur son extrémité (15) axiale intérieure.

7. Dispositif de nettoyage des gaz brûlés selon la revendication 1 ou 6,
**caractérisé en ce que**
les dispositifs de nettoyage (3) sont soutenus radialement sur le boîtier (2) de façon à pouvoir coulisser axialement sur leurs extrémités (15) axiales intérieures.

8. Dispositif de nettoyage des gaz brûlés selon la revendication 7,
**caractérisé en ce que**
le boîtier (2) présente, pour le logement, coulissant axialement et soutenu radialement, des éléments de nettoyage (3) dans la zone de l'agencement de palier (14) un creux de forme angulaire, dépassant radialement vers l'intérieur, ou plusieurs creux (24) dépassant radialement vers l'intérieur et disposés de façon répartie dans le sens périphérique.

9. Dispositif de nettoyage des gaz brûlés selon l'une quelconque des revendications 6 à 8,
**caractérisé en ce que**
l'agencement de palier (14) présente uniquement un corps annulaire (23) sur lequel d'une part l'un des dispositifs de nettoyage (3) est fixé par son extrémité (15) axiale intérieure et sur lequel d'autre part l'autre dispositif de nettoyage (3) est soutenu radialement de façon à pouvoir coulisser sur son extrémité (15) axiale intérieure.

10. Dispositif de nettoyage des gaz brûlés au moins selon la revendication 4 ou 9,
**caractérisé en ce que**
sur au moins l'un des corps annulaires (16, 17) est fixée radialement à l'extérieur une bague de palier (19) à base d'un matériau de palier, par laquelle le corps annulaire (16, 17) respectif s'appuie radialement sur le boîtier (2) de façon à pouvoir coulisser axialement.

11. Dispositif de nettoyage des gaz brûlés selon l'une quelconque des revendications 1 à 10,
**caractérisé en ce que**
au moins l'un des éléments de nettoyage (3) présente son extrémité (15) axiale intérieure une collerette (18) débordant axialement, qui entoure radialement à l'extérieur l'agencement de palier (14).

12. Dispositif de nettoyage des gaz brûlés selon l'une quelconque des revendications 1 à 11,
**caractérisé en ce que**
le corps annulaire (16, 17, 23) respectif présente dans le sens périphérique une interruption (20, 21) qui s'étend de façon continue à partir d'un des côtés avant axiaux du corps annulaire (16, 17, 23) respectif jusqu'à l'autre côté avant axial du corps annulaire (16, 17, 23) respectif.

13. Dispositif de nettoyage des gaz brûlés selon l'une quelconque des revendications 1 à 12,
**caractérisé en ce que** le boîtier (2) comprend deux parties de boîtier (6, 7) qui sont emboîtées l'une dans l'autre dans la direction axiale et sont fixées l'une contre l'autre.

14. Dispositif de nettoyage des gaz brûlés selon l'une quelconque des revendications 1 à 13,
**caractérisé en ce que**
le boîtier (2) est espacé axialement des dispositifs de nettoyage (3) axialement entre les extrémités (12) axiales extérieures des dispositifs de nettoyage (3).
